# EUROPEAN PATENT APPLICATION

(11) **EP 2 693 173 A1**
(43) Date of publication of application: **05.02.2014**
(21) Application number: 13178218.7
(22) Date of filing: 26.07.2013
(51) Int. Cl.: G01F 11/24, A47J 31/40

(54) **Measuring accessory for a container of infusion powders for machines for the preparation of beverages**

(30) Priority: 31.07.2012 IT MI20121349
(71) Applicant: F.A.S. International S.p.A., 36015 Schio (Vicenza) (IT)
(72) Inventor: Cattaneo, Pietro, 36015 Schio VI (IT); De Meda, Gianni, 36014 Santorso VI (IT)
(74) Representative: Sgobba, Marco

(57) **Abstract**

A measuring accessory (10) for a container (1) of infusion powders comprises a closing lid (6) intended to be applied in closure to the container (1) and provided with a dispensing hole (5) to dispense infusion powder doses to a machine for preparing beverages, measuring members (7) coupled to the closing lid (6) and arranged to rotate within the container (1), when the closing lid (6) is applied al container (1), to face powder doses to the dispensing hole (5), and removable attachment members (20) to removably attach the measuring accessory (10) to the container (1).

## Description

### TECHNICAL FIELD

The present invention relates to a measuring accessory for a container of infusion powders for machines for preparing beverages, such as, for example, coffee.

### BACKGROUND OF THE INVENTION

The infusion powders are used in machines for preparing beverages of an automatic type. Such machines are, for example, automatic dispenser for preparing beverages to be dispensed on demand, professional coffee machines used in cafés, and household coffee machines. A typical example of an infusion powder used in the above-mentioned machines is the coffee powder that is used for preparing an espresso coffee. Espresso coffee is a beverage obtained by percolating pressurized hot water passing through a coffee powder layer. Upon passing through the coffee powder, the pressure of water ends, and the beverage exits at an atmospheric pressure. Grinding the roasted coffee to a particularly fine particle size offers a resistance to the percolation water such as to allow withdrawing aromatic substances that confer the beverage the typical characteristics of creaminess, flavor, body, and aftertaste. The freshness of the ground mixture is particularly important, since the coffee powder tends to oxidize upon time, thus making the oily substances contained therein to go rancid, resulting in a lesser production of crema and alteration of taste.

For this reason, the coffee powders are usually provided in hermetically sealed vacuum containers, so that the freshness and organoleptic properties of the coffee are not altered. Such containers, which may be made of a slack material or in the shape of a can, are opened by the end user in the very moment when the coffee powders are to be used. It shall be apparent that the containers, once they are opened, are not able to protect the coffee powders from the oxidizing process anymore.

Therefore, when preparing a coffee, the problem of infusion powder oxidation is especially felt, since a good reserve of ready-to-use infusion powders has to be ensured in order to allow preparing a suitable number of coffees. In fact, without a suitable reserve of coffee powders, the coffee beans should be ground each time, resulting in (often unacceptably) lengthening the beverage preparation times.

In order to preserve the organoleptic properties of the coffee powders as long as possible, solutions were developed, which provide for the use of containers for coffee powders in the form of capsules o pods that are hermetically sealed and containing a dose of product that is sufficient for preparing only one coffee. The powdery product maintains its organoleptic properties; however, this solution involves very high operating costs, since the infusion powder needs to be packaged in sealed single doses.

In view of the described state of the art, the technical task of the present invention is to propose a measuring accessory for container of infusion powders for machines for preparing beverages that is free from the above-mentioned drawbacks.

Particularly, the object of the present invention is to provide a measuring accessory for a container of infusion powders for machines for preparing beverages capable of preserving as long as possible the organoleptic properties of the infusion powders, while ensuring a suitable reserve of ready-to-use powders.

### ABSTRACT OF THE INVENTION

In accordance with the present invention, the technical task and the object proposed are achieved by a measuring accessory for a container of infusion powders for machines for preparing beverages according to the characteristics of one or more of the appended claims.

### BRIEF DESCRIPTION OF THE DRAWINGS

The characteristics and advantages of the present invention will be apparent from the following detailed description of an embodiment, given by way of non-limiting example, with reference to the appended drawings, in which:

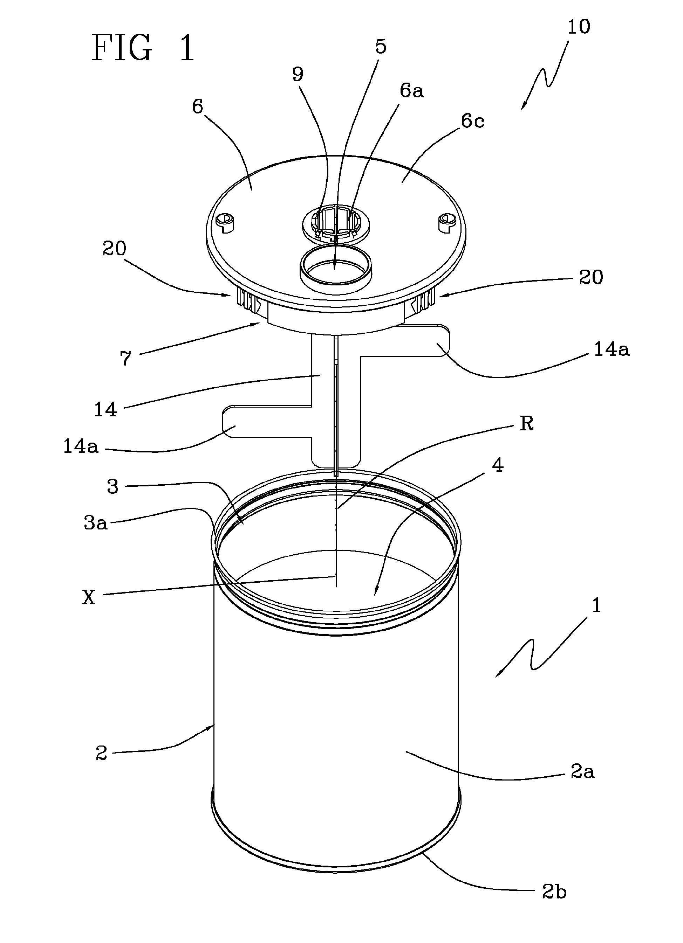

- Fig. 1 shows a perspective, schematic view of a measuring accessory in accordance with a first embodiment of the present invention and a container of infusion powders for machines for preparing beverages to which the measuring accessory is intended to be applied,

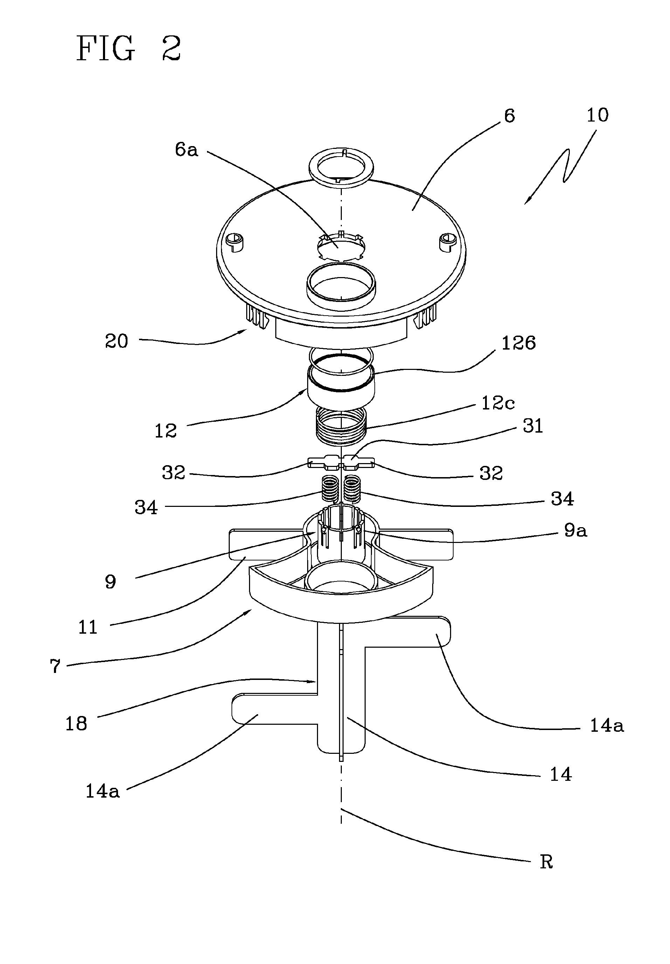

- Fig. 2 shows a exploded schematic view of the measuring accessory of Fig. 1,

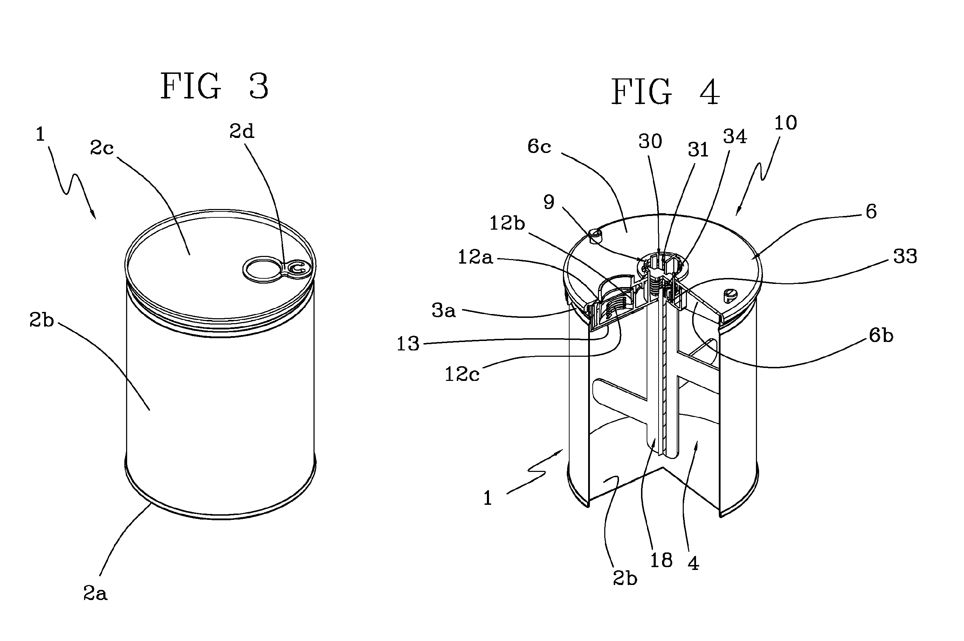

- Fig. 3 shows the container of Fig. 1 before opening it,
- Fig. 4 shows the container of Fig. 1 after opening it and with the accessory of Fig. 1 coupled thereto,

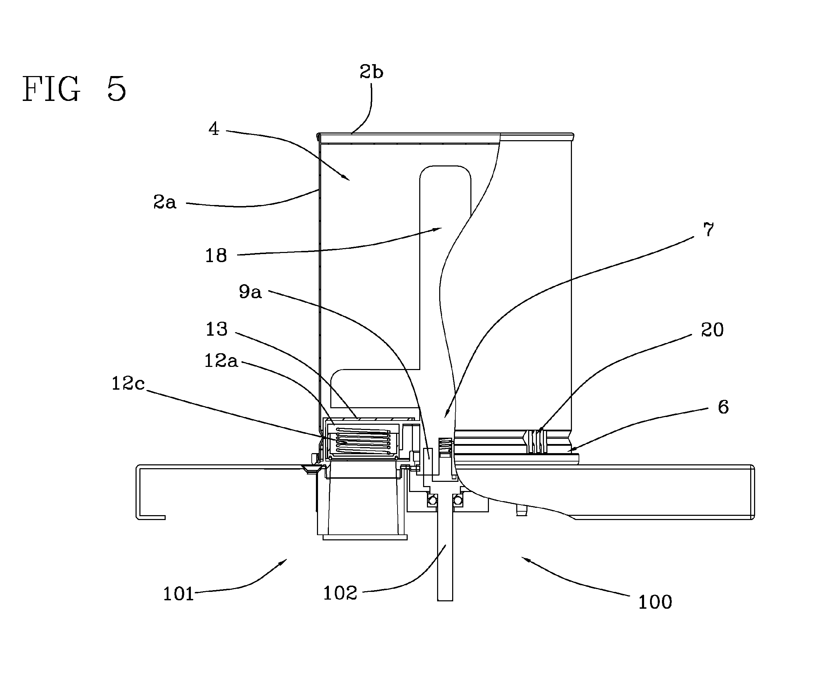

- Fig. 5 shows the container of Fig. 4 and the accessory of Fig. 1 coupled thereto, mounted on a machine for preparing beverages,

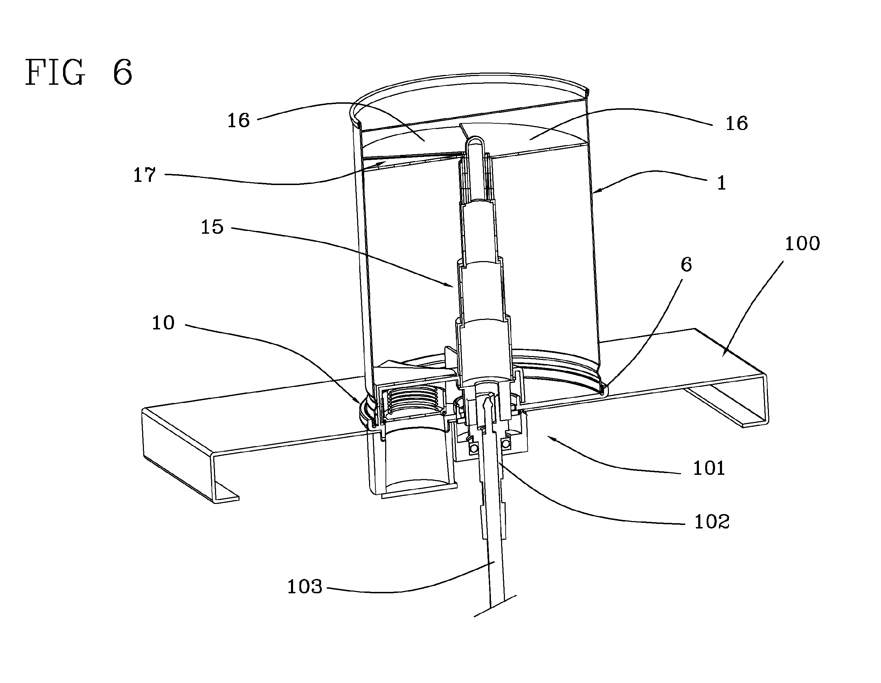

- Fig. 6 shows a container with an accessory coupled thereto in accordance with a second embodiment of the present invention, mounted on a machine for preparing beverages,

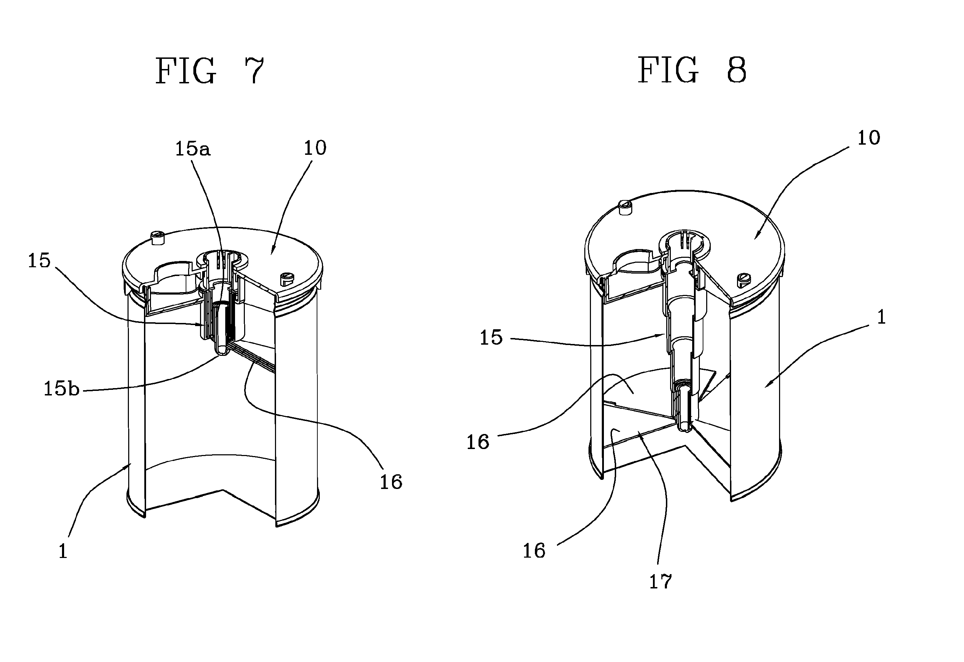

- Figs. 7 and 8 show the accessory of Fig. 6 in different operative configurations.

### DETAILED DESCRIPTION OF THE INVENTION

A measuring accessory for a container 1 of infusion powders for machines for preparing beverages in accordance with the present invention has been generally indicated with the number 10. The following description will refer explicitly to the coffee powders (o ground coffee) as an example of an infusion powder, without however limiting the field of use only to the coffee powder.

The container 1 comprises a substantially cylindrical containment body 2 having an opening 3, defined by an edge 3a and suitable to put in fluid communication the external environment with the environment inside the containment body 2.

In the example, the containment body 2 is a rigid body (i.e., capable of keeping the same shape both when it is filled with coffee powder and when it is empty), and it has an inner cavity 4, containing infusion powders, for example, ground coffee, defined by a curved side wall 2a, a bottom wall 2b integral to the side wall 2a and a closure wall 2c, opposite the bottom wall 2a, which hermetically closes the containment body 2 at the opening 3. In the example, the closure wall 2c is provided with a tear tab 2d arranged to be torn off upon the first opening of the container 1 to remove the closure wall 2c and to make the inner cavity 4 accessible through the opening 3.

The measuring accessory 10 comprises a closing lid 6 intended to be applied in closure to the container 1 of infusion powders and having a dispensing hole 5 to dispense doses of infusion powders to a machine for preparing beverages, measuring members 7 coupled in rotation to the closing lid 7 and arranged to rotate within the container 1 to face doses of powders to the dispensing hole 5 and removable attachment members 20 to removably attach the measuring accessory 10 to the container 1.

The closing lid 6 has a side 6b intended to face the cavity 4 of the container 1 and an opposite side 6c intended to face the consumer, when the measuring accessory 10 is attached to a container 1.

In accordance with an embodiment, the removable attachment members 20 are configured to be attached to the edge 3a of the container 1 and the closing lid 6 is shaped to hermetically engage the edge 3a so as to close the opening 3 of the container 1.

Therefore, when the measuring accessory 10 is attached to the container 1, the inner cavity 4 containing ground coffee is defined by the closing lid 6 of the measuring accessory 10 and by the walls 2a, 2b of the containment body 2.

In accordance with an embodiment, the attachment members 20 comprise a plurality of elastically deformable members arranged along the perimeter of the closing lid 6 to snap attach with the edge 3 of the container 1.

The dispensing hole 5 is arranged to be coupled to a station 101 for receiving doses of coffee powders of a machine for preparing beverages 100, whether it is an automatic dispenser, a machine for a café, or a household machine. such machine 100 provides for the preparation of the beverage starting from the dose of coffee powders received in the receiving station 101, according to modes that are not within the context of the present invention (therefore they will be not described).

The measuring members 7 perform the function of drawing preset amounts of coffee powders from inside the cavity 4 and to bring them to the dispensing hole 5. The measuring members 7 are mounted on the closing lid 6 from the side 6b intended to face the cavity 4 of the container 1. In particular, as mentioned above, the measuring members 7 are arranged to rotate within the cavity 4 and, in the preferred embodiment of the invention, they are mounted to rotate with respect to the closing lid 6 about a rotational axis R substantially coincident with the central (or symmetry) axis X of the containment body 2 to which the measuring accessory 10 is applied.

The measuring members 7 comprise a coupling member 9 arranged to draw a driving torque from the machine 100 to rotate the measuring members 7. Preferably, the coupling member 9 comprises a coupling sleeve 9a for a rotating shaft 102 of the machine 100. The coupling sleeve 9a passes through an opening 6a obtained in the closing lid 6 to face the environment outside the containment body 2, and therefore to be able to face the machine 100. The coupling sleeve 9a is coaxial with the rotational axis R of the measuring members 7.

In the preferred embodiment of the invention, the measuring members 7 comprise a plurality of measuring chambers 11 that are arranged to intercept preset amounts of coffee powders and to convey them at the dispensing hole 5. Preferably, the measuring members 7 are obtained in a disc. The measuring chambers 11 are composed of peripheral notches of the disc (i.e., by peripheral opening that are drilled in the disc) and they preferably have the same dimensions. The powders contained in the cavity 4 fill the measuring chambers 11, and the disc rotation conveys the powders that are present therein towards the dispensing hole 5. In particular, the measuring chambers 11 face in succession above the dispensing hole 5. When a measuring chamber 11 intercepts the dispensing hole 5, the powders of the measuring chamber 11 fall into the dispensing hole 5 and reach the receiving station 101 of the machine 100.

The measuring members 7 further comprise a shutter 12 selectively acting on the dispensing hole 5 for the closure thereof and for inhibiting leakages of coffee powders from the inner cavity 4 of the containment body 2. The shutter 12 is also obtained on the above-mentioned disc. In particular, the shutter 12 comprises a section 12a of the same disc that, by overlapping to the dispensing hole 5, closes it. The shutter 12 performs the function to close the dispensing hole 5 when the machine 100 transports the dose released in the receiving station 101 to proceed to the preparation of the beverage. In the preferred embodiment of the invention, the shutter 12, besides the above-mentioned section 12a of the disc, comprises a slider 12b inserted to size in a cavity of the disc section 12a (i.e., counter-shaped to the cavity of the section 12a and inserted therein). Such cavity is open on the side facing the closing lid 6, therefore it faces the dispensing hole 5. The slider 12b has dimensions that are larger than that of the dispensing hole 5 and rests on the latter when the section 12a is at the hole 5. The slider 12b is kept pressed against the dispensing hole 5 by a spring 12c extending between the slider and an upper wall of the section 12a of the disc that defines the above-mentioned cavity. When the measuring members 7 rotate, the slider 12b follows the rotation of the section 12a by sliding (due to the action of the spring 12c) on the closing lid 6. In this manner, when the slider 12b is in a closure position of the dispensing hole 5, the coffee powders cannot go out through the hole 5.

A divider 13 integral to the closing lid 6 extends in elevation above the dispensing hole 5. Such divider 13 is arranged at such a height to allow the rotation of the measuring members 7 without interfering with them. The divider 13 has the function to avoid that coffee powders not contained in the measuring chambers 11 are able to pass through the dispensing hole 5 when a measuring chamber 11 is at the same hole. In fact, it shall be noticed that the measuring chambers 11 are open both on the side facing the closing lid 6 (to allow discharging the dose of coffee powder into the dispensing hole 5) and on the side facing the cavity 4 of the containment body 2 (to allow withdrawing of coffee powders from the cavity 4).

In accordance with a first embodiment, the measuring accessory 10 comprises a stirrer 18 constrained in rotation to the measuring members 7 to mix the powders that are present in the cavity 4. The stirrer 18 comprises a rigid rod 14 extending from the side 6b of the closing lid 6 along a direction substantially coincident with the rotational axis R of the measuring members 7. The rigid rod 14 is provided with a plurality of blades 14a projecting from the rigid rod 14 transversally thereto, and arranged mutually spaced apart therealong. In this manner, upon each dispensing operation of coffee doses through the dispensing hole 5, the stirrer 18, through the blades 14a, provides to mix the powders that are present in the cavity 4 so as to ensure that all the powder arrives at the measuring members 7.

In accordance with a second embodiment, the measuring accessory 10 comprises a telescopic rod 15 coupled to the closing lid 6 and rotatably mounted relative thereto. Such rod 15 is telescopically extensible and retractable moving away from and approaching the the closing lid 6, respectively, and, on the opposite part relative to the closing lid 6, it is provided with a plurality of sections 16 that are intended to form a plate 17.

In particular, the telescopic rod 15 is suitable to pass from a closed configuration, in which the rod 15 is in a retracted configuration, and the sections 16 are mutually overlapping, to an open configuration, in which the rod 15 is telescopically extended, and the sections 16 form the plate 17. To such an aim, the telescopic rod 15 has a coupling sleeve 15a for a guide member 103, for example a rototranslating shaft, of the machine 100. The coupling sleeve 15a is arranged at the distal end 15b of the rod 15. The telescopic rod 15 is hollow internally, so that the coupling sleeve 15a is arranged to be directly (removably) constrainable to the guide member 103 of the machine for preparing beverages. It shall be noted that, in use, the telescopic rod 15 is always completely contained within the containment body 2.

In the closed configuration, the rototranslation of the coupling sleeve 15a determines a "tailspin" of the sections 16 within the cavity 4 and thus in the coffee powder contained therein. When the rod 15 reaches the open configuration, the coupling sleeve 15a is arranged in rotation in the opposite direction, so as to rotate the sections 16 until bringing them to form a plate 17.

The guide member 103 provides to exert a traction action on the rod 15 upon each dispensing operation of a coffee dose from the dispensing hole 5 (or upon each rotation of the measuring members 7).

Therefore the plate 17 is translatable, within the containment body 2, approaching to the closing lid 6. In this manner, upon each dispensing operation of coffee doses through the dispensing hole 5, the volume of the cavity 4 containing the coffee powders decreases. Such cavity 4 volume decrease involves a compaction of the powders, eliminating or anyhow minimizing the air contained in the volume taken by the powders. The reduction of the air that is present in the volume taken by the powders reduces the oxidation thereof, thus preserving the organoleptic properties thereof.

The plate 17 is counter-shaped to the inner cavity 4. In the preferred embodiment of the invention, therefore, the plate 17 has a cylindrical shape. In particular, the plate 17 is in sliding contact with the side wall 2a of the containment body 2, avoiding that, during the compaction of the powders, the latter may pass between the plate 17 and the side wall 2a of the containment body 2, thus nullifying the compaction effect.

In accordance with an embodiment, the measuring accessory 10 comprises locking members 30 arranged to inhibit the rotation of the measuring members 7 when the closing lid 1 is disconnected from the machine for preparing beverages 100. To this aim, the locking members 30 are mobile between a locking position and an unlocking position in which they prevent and allow, respectively, the rotation of the measuring members 7.

In the example, the locking members 30 comprise a little plate 31 coupled to the coupling member 9 of the measuring members 7 and provided with two keys 32 intended to engage two corresponding seats 33 obtained in the closing lid 6. Elastic members 34 maintain the little plate 31 in a locking position, so that the two keys 32 engaged in the seats 33 of the closing lid 6 prevent the rotation of the coupling member 9 and thus of the measuring members 7. When the coupling member 9 couples with a rotating shaft 102 of the machine 100, the little plate 31 is pushed, opposing the action of the elastic members 34, until disengaging the two keys 32 from the seats 33, so as to allow the rotation of the coupling member 9 with respect to the closing lid 6.

In use, a container 1 containing the coffee powders was completely sealed, preserving the organoleptic properties of the ground coffee, since the latter does not contact the air in the external environment. Then it is proceeded to remove the closure wall 2c of the containment body 2, exposing the opening 3 to the external environment. Then the measuring accessory 10 is attached to the edge 3a of the container 1 and the container 1-measuring accessory 10 assembly is fitted on a special housing of a machine 100 so that the dispensing hole 5 is in communication with the receiving station 101. Simultaneously, the rotating shaft 102 is fitted on the coupling sleeve 9a of the measuring members 7 and, where provided, the guide member 103 is fitted on the coupling sleeve 15a of the telescopic rod 15.

The dispensing of the doses of ground coffee occurs according to what has been already stated above.

It shall be noted that when the necessary doses of coffee powder have been withdrawn, the container 1 may be removed from the machine 100, for example to place it in a refrigerated environment (so as to further limit the ground coffee oxidation). Furthermore, when the container is removed from the machine 100, the container allows to keep the coffee powders isolated from the external environment, since the dispensing hole 5 (the only opening that puts in fluid communication the inside and the outside of the container) is closed by the measuring members 7.

In other terms, the container 1 allows withdrawing the coffee powders contained therein, limiting to the highest degree the inlet of air into the container, exactly by virtue of the fact that the measuring members 7 are contained within the container.

When all the coffee powder of the container has been withdrawn (therefore the container cannot be used anymore), the measuring accessory 10 may be removed from the container 1 and applied to a new container 1, or the previous container 1 may be filled with powdery coffee.

From what has been described above, it emerges that the measuring accessory 10 is capable of preserving the organoleptic properties of the powders minimizing the oxidation thereof, while providing a high number of ready-to-use ground coffee doses.

It shall be apparent that those skilled in the art, with the aim of meeting contingent, specific needs, will be able to make a number of modifications and variations to the above-described configurations. All such variations and variations anyhow fall within the protection scope of the invention as defined by the following claims.

## Claims

1. A measuring accessory (10) for a container (1) of infusion powders, having an opening (3) defined by an edge (3a), said measuring accessory (10) comprising:
- a closing lid (6) intended to be applied in closure to a container (1) of infusion powders, said closing lid (6) having a dispensing hole (5) to dispense doses of infusion powder to a machine for the preparation of beverages,
- measuring members (7) coupled in rotation to the closing lid (6) and arranged to rotate within the container (1), when said closing lid (6) is applied to the container (1), to face doses of powder to said dispensing hole (5),
- removable attachment members (20) to removably attach the measuring accessory (10) to the container (1).

2. The measuring accessory (10) in accordance with claim 1, wherein said measuring members (7) comprise a coupling member (9) arranged to draw a driving torque from a machine for the preparation of beverages and to transmit it to said measuring members (7).

3. The measuring accessory (10) in accordance with claim 2, wherein said coupling member (9) comprises a coupling sleeve (9a), said coupling sleeve (9a) passing through an opening (6a) obtained in the closing lid (6).

4. The measuring accessory (10) in accordance with any one of the claims 1 to 3, wherein said measuring members (7) comprise a plurality of measuring chambers (11) that are arranged to intercept preset amounts of infusion powders and to convey them at said dispensing hole (5).

5. The measuring accessory (10) in accordance with any one of the claims 1 to 4, wherein said measuring members (7) comprise a shutter (12) selectively acting on said dispensing hole (5) for the closure thereof and for inhibiting leakages of infusion powders from the container (1).

6. The measuring accessory (10) in accordance with any one of the claims 1 to 5, wherein a stirrer (18) is constrained in rotation to said measuring members (7) to mix the powders that are present in the container (1), said stirrer (18) comprising a rod (14) extending, from the side (6b) of the closing lid (6) intended to be faced to the container (1), along a longitudinal direction (X), said rod (14) being provided with a plurality of blades (14a) projecting from the rod (14) transversally thereto, and arranged mutually spaced apart therealong.

7. The measuring accessory (10) in accordance with any one of the claims 1 to 6, wherein a telescopic rod (15) is coupled to the closing lid (6) and rotatably mounted relative to said closing lid (6), said telescopic rod (15) being telescopically extensible and retractable moving away from and approaching the closing lid (6), respectively, and, on the opposite part relative to the closing lid (6), being provided with a plurality of sections (16) that are intended to form a plate (17).

8. The measuring accessory (10) in accordance with claim 7, wherein said telescopic rod (15) is suitable to pass from a closed configuration, in which the rod (15) is in a retracted configuration, and the sections (16) are mutually overlapping, to an open configuration, in which the rod (15) is telescopically extended, and the sections (16) form the plate (17), said plate (17) being translatable towards said closing lid (16) in order to compact the powders contained in the container (1) upon each dispensing of doses of infusion powders from said dispensing hole (5).

9. The measuring accessory (10) in accordance with any one of the claims 1 to 8, wherein said removable attachment members (20) are configured to attach to the edge (3a) of the container (1), and said closing lid (6) is shaped to sealingly engage the edge (3a) of the container (1) so as to close the opening (3) of the container (1).

10. A container-measuring accessory assembly comprising:
- a container (1) for infusion powders comprising a substantially cylindrical containment body (2) having an opening (3), defined by an edge (3a), and suitable to put into fluidic communication the external environment with the environment within the containment body (2),
- a measuring accessory (10) in accordance with any one of the claims 1 to 9, attached to said container (1).
